# EUROPEAN PATENT APPLICATION

(11) **EP 1 612 115 A1**
(43) Date of publication of application: **04.01.2006**
(21) Application number: 05254134.9
(22) Date of filing: 30.06.2005
(51) Int. Cl.: B60T 11/04, B62M 9/12, F16C 1/18

(54) **Motor vehicle cable assembly having segmented chain cable end**

(30) Priority: 30.06.2004 US 881274
(71) Applicant: Dura Global Technologies, Inc., Rochester Hills, Michigan 48309 (US)
(72) Inventor: Hanna, Ronald J., Mancelona MI 49659 (US); Partak, James S., Traverse City MI 49686 (US)
(74) Representative: Trueman, Lucy Petra

(57) **Abstract**

A motor vehicle cable assembly (10) includes a cable (26) having a first end (24) and a second end and an end fitting (44) secured to the first end (24) of the cable (26). A segmented chain (30) has a first end (28) and a second end (34) with the first end (28) of the segmented chain (30) being pivotally (42) connected to the end fitting (40,44).

## Description

### FIELD OF THE INVENTION

This invention relates generally to a motor vehicle cable assembly, and, in particular, to a motor vehicle cable assembly having a segmented chain connected to one end of a cable.

### BACKGROUND OF THE INVENTION

Motor vehicle subassemblies often use cables to transfer power from an actuator to a device. For example, parking brakes are activated by a user pulling on a hand lever. The hand lever is connected to a drum about which a first end of a cable is wound. The other end of the cable is connected by way of an equalizer bracket to two cables, each of which is connected to a brake. The cable is typically a stranded cable, which is susceptible to metal fatigue. The life of the cable is limited by the diameter of the drum about which the cable is wound. The drum diameter required to maximize cable life is based on a multiple of the cable diameter. However, often times the minimum drum diameter cannot be achieved due to factors such as travel, speed and/or load requirements, thereby leading to reduced cable life. Further, drums can be complex and costly to manufacture.

It is an object of the present invention to provide a motor vehicle cable assembly that reduces or overcomes some or all of the difficulties inherent in prior known devices. Particular objects and advantages of the invention will be apparent to those skilled in the art, that is, those who are knowledgeable or experienced in this field of technology, in view of the following disclosure of the invention and detailed description of certain preferred embodiments.

### SUMMARY

The principles of the invention may be used to advantage to provide a motor vehicle cable assembly having a segmented chain secured to an end of a cable. In accordance with a first preferred embodiment, a motor vehicle cable assembly includes a cable having a first end and a second end and an end fitting secured to the first end of the cable. A segmented chain has a first end and a second end, with the first end of the segmented chain being pivotally connected to the end fitting.

In accordance with another preferred embodiment, a motor vehicle cable assembly includes a cable having a first end and a second end, with an end fitting secured to the first end of the cable. The second end of the cable is configured to be connected to an operable device. A segmented chain has a first end and a second end, with the first end of the segmented chain pivotally connected to the end fitting. A portion of the segmented chain engages a sprocket.

In accordance with a further embodiment, a motor vehicle parking brake cable assembly includes a cable having a first end and a second end, with an end fitting secured to the first end of the cable. The second end of the cable is configured to be connected to a parking brake of a motor vehicle. A segmented chain has a first end and a second end, with the first end pivotally connected to the end fitting. The segmented chain wraps about a sprocket with a first end of the segmented chain pivotally secured to the sprocket. A hand lever is secured to the sprochet, and a rotatable disk is secured to the hand lever. A plurality of teeth is formed along a portion of a periphery of the disk, and a pawl has teeth that are engageable with the plurality of teeth of the rotatable disk.

Substantial advantage is achieved by providing a motor vehicle cable assembly having a segmented chain secured to an end of a cable. Such a segmented chain can be wrapped about and engage a small diameter sprocket without sacrificing cable life, advantageously reducing the size of the cable assembly and costs associated with its manufacture.

These and additional features and advantages of the invention disclosed here will be further understood from the following detailed disclosure of certain preferred embodiments.

### BRIEF DESCRIPTION OF THE DRAWINGS

FIG. 1 is an elevation view of a motor vehicle cable assembly in accordance with a preferred embodiment of the present invention, having a segmented chain connected at a first end to a cable and at its second end to a sprocket of a parking brake assembly.
FIG. 2 is a plan view of a clevis of the motor vehicle cable assembly of FIG. 1, shown connecting an end of the cable to an end of the segmented chain.
FIG. 3 is an elevation view of a motor vehicle cable assembly in accordance with another preferred embodiment of the present invention, having a segmented chain connected it a first end to a cable and engaging a sprocket of a parking brake assembly, with a second end of the segmented chain received in an accumulator.

The figures referred to above are not drawn necessarily to scale and should be understood to provide a representation of the invention, illustrative of the principles involved. Some features of the motor vehicle cable assembly depicted in the drawings have been enlarged or distorted relative to others to facilitate explanation and understanding. The same reference numbers are used in the drawings for similar or identical components and features shown in various alternative embodiments. Motor vehicle cable assemblies as disclosed herein would have configurations and components determined, in part, by the intended application and environment in which they are used.

### DETAILED DESCRIPTION OF CERTAIN PREFERRED EMBODIMENTS

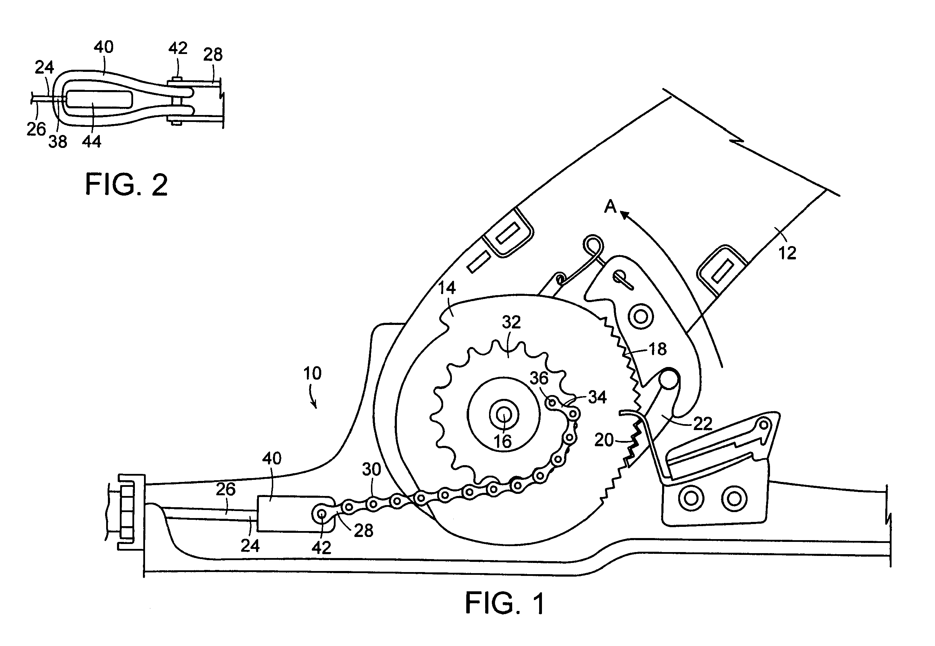

The present invention may be embodied in various forms. A preferred embodiment of a motor vehicle cable assembly 10 is shown in FIG. 1. As illustrated here, cable assembly 10 is incorporated in a parking brake of a motor vehicle. It is to be appreciated that cable assembly 10 could be part of any other motor vehicle assembly actuated by a cable, for example, tire carriers or window regulators.

A hand lever 12 (only the lower portion of which is shown here) that is actuated by a user has a disk 14 secured to its lower end by way of a pin 16. Disk 14 includes a plurality of teeth 18 on its periphery, which are engaged by mating teeth 20 on a pawl 22. The engagement of teeth 20 of pawl 22 with teeth 18 of disk 14 secures hand lever 12 in a selected position after it is pulled by a user to apply the parking brake in known fashion.

A first end 24 of a cable 26 is pivotally connected to a first end 28 of a segmented chain 30. The opposed second end of cable 26 is connected in known fashion to the brakes of a vehicle, for example, by way of an equalizer bracket that connects to two brake cables (not shown here). A portion of segmented chain 30 is wrapped around and engages a sprocket 32, through which pin 16 extends. In a preferred embodiment, a second end 34 of chain 30 is pivotally secured to sprocket 32 by way of a pin 36. It is to be appreciated that segmented chain 30 can be a ladder chain, a roller chain, or any other suitable segmented chain.

As hand lever 12 is moved upwardly by the user to engage the parking brake, disk 14 and sprocket 32 rotate with disk 14 in the direction of arrow A (counterclockwise as seen here). As sprocket 32 rotates, segmented chain 30 wraps about sprocket 32, pulling on cable 26 and actuating the parking brake. To release the parking brake, pawl 22 is released from engagement with disk 14 in known fashion, thereby releasing the tension on cable 26 and releasing the engagement of the parking brake.

In a preferred embodiment, as illustrated in FIG. 2, first end 24 of cable 26 extends through an aperture 38 in a clevis 40. First end 28 of segmented chain 30 is pivotally secured to clevis 40 with a clevis pin 42. An end fitting 44 is secured to first end 24 of cable 26 and engages clevis pin 40 to retain first end 24 of cable 26 on clevis 40. End fitting 44 may be, for example, swaged or cast. Thus, cable 26 is pivotally secured to segmented chain 30 by way of end fitting 42 and clevis 40, which allows cable 26 to twist or unwrap as load is applied.

It is to be appreciated that there are many possible fittings that would secured first end 24 of cable 26 to first end 28 of segmented chain 30, and other suitable fittings will become readily apparent to those skilled in the art, given the benefit of this disclosure.

Since segmented chain 30 can be wrapped tightly about sprocket 32, a small diameter sprocket can be used without angular travel constraints, resulting in a more compact package and reduced costs. Additionally, the use of segmented chain 30 alleviates concerns about the life of table 26. Further, sprocket 32 can be formed by stamping, which requires little or no assembly, thereby reducing costs.

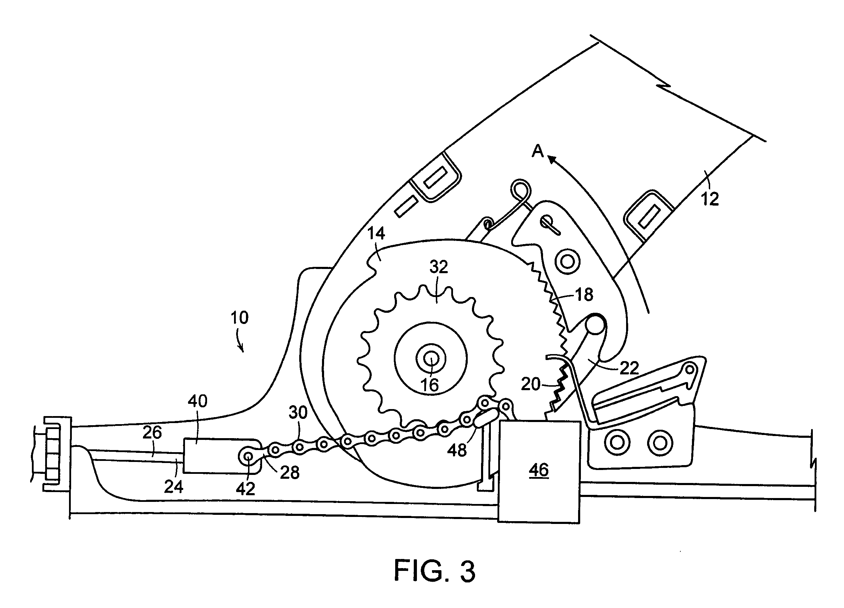

Another preferred embodiment of motor vehicle cable assembly 10 is shown in FIG. 3. In this embodiment, second end 34 of segmented chain 30 is not secured to sprocket 32, but, rather, is received in an accumulator 46. A follower 48 is positioned proximate sprocket 32 and retains segmented chain 30 on sprocket 32. In this embodiment, segmented chain 30 has a much greater range of travel over sprocket 32, since it is not limited by being connected at one end to sprocket 32.

In light of the foregoing disclosure of the invention and description of the preferred embodiments, those skilled in this area of technology will readily understand that various modifications and adaptations can be made without departing from the scope and spirit of the invention. All such modifications and adaptations are intended to be covered by the following claims.

## Claims

1. A motor vehicle cable assembly comprising, in combination: a cable having a first end and a second end; an end fitting secured to the first end of the cable; a segmented chain having a first end and a second end, the first end of the segmented chain pivotally connected to the end fitting.

2. The motor vehicle cable assembly of claim 1 wherein the second end of the cable is configured to be connected to an operable device; and wherein the assembly further comprises a sprocket, a portion of the segmented chain engaging the sprocket.

3. The motor vehicle cable assembly of claim 1 or 2, wherein the second end of the segmented chain is secured to a sprocket.

4. The motor vehicle cable assembly of claim 1 or 2, wherein the second end of the segmented chain is pivotally secured to a sprocket by a pin.

5. The motor vehicle cable assembly of claim 1 or 2, wherein the second end of the segmented chain is received in an accumulator.

6. The motor vehicle cable assembly of claim 5, further comprising a follower proximate the sprocket, the follower retaining the segmented chain on the sprocket.

7. The motor vehicle cable assembly of claim 1 or 2, wherein the end fitting is a swaged fitting.

8. The motor vehicle cable assembly of claim 1 or 2, wherein the end fitting is a cast fitting.

9. The motor vehicle cable assembly of claim 1 or 2, wherein the first end of the chain is connected to the fitting by a clevis and clevis pin.

10. A motor vehicle parking brake cable assembly comprising, in combination:
a cable having a first end and a second end, an end fitting secured to the first end of the cable, and the second end configured to be connected to a parking brake of a motor vehicle; a segmented chain having a first end and a second end, the first end of the segmented chain pivotally connected to the fitting; a sprocket, the segmented chain wrapping about the sprocket with a second end of the segmented chain pivotally secured to the sprocket; a hand lever secured to the sprocket; a rotatable disk secured to the hand lever, a plurality of teeth formed along a portion of a periphery of the disk; and a pawl having teeth engageable with the plurality of teeth of the rotatable disk.

11. The motor vehicle cable assembly of claim 10, wherein the first end of the chain is connected to the fitting by a clevis and clevis pin.

12. The motor vehicle cable assembly of claim 10, wherein the second end of the segmented chain is pivotally secured to the sprocket by a pin.

13. The motor vehicle cable assembly of claim 10, wherein the end fitting is one a swaged fitting and a cast fitting.
